# EUROPEAN PATENT SPECIFICATION

(11) **EP 2 378 862 B1**
(45) Date of publication and mention of the grant of the patent: **26.06.2013**
(21) Application number: 10700063.0
(22) Date of filing: 08.01.2010
(51) Int. Cl.: A01K 1/00, A01K 1/01, B05B 13/04

(54) **METHOD AND APPARATUS FOR DUST REDUCTION IN ANIMAL HOUSES**
VERFAHREN UND VORRICHTUNG ZUR STAUBREDUKTION IN STÄLLEN
PROCÉDÉ ET APPAREIL POUR LA RÉDUCTION DE POUSSIÈRE DANS DES ABRIS POUR ANIMAUX

(30) Priority: 08.01.2009 NL 2002400
(43) Date of publication of application: 26.10.2011
(73) Proprietor: Joz B.V., 1617 KK Westwoud (NL)
(72) Inventor: AARNINK, Andreas Johannes Antonius, NL-6674 BG Herveld (NL); BOKMA, Sjoerd, NL-8166 GD Emst (NL)
(74) Representative: Jansen, Cornelis Marinus
(86) International application number: PCT/NL2010/050005
(87) International publication number: WO 2010/080029

(56) References cited:
- EP-A- 1 785 029
- WO-A-00/70941
- WO-A-2006/005158
- WO-A-2007/067037
- US-A1- 2006 005 765

## Description

The invention relates to the field of livestock housing, more particularly to a method and an apparatus for dust reduction in animal houses.

For years, dust has been a point of interest in the livestock industry, in particular from the viewpoint of human and animal health and well-being. Livestock farmers, especially in the poultry and pig sector, are commonly exposed to indoor dust concentrations that exceed those in the outside air by a factor of 10 to 200. Research has shown that inhalation of dust at such concentrations can cause lung and airway disorders, of which there is indeed a relatively high incidence among livestock farmers. It has also become apparent that animal house dust does not restrict itself to the indoor environment. High indoor dust concentrations are emitted to the environment, inter alia via air ventilation systems. In recent years, legislation to improve the outside air quality by restricting the uncontrolled emission of fine dust, including emissions from animal houses, has become effective in both the European Union and other jurisdictions. As a consequence of these and other factors, the problem of reducing the levels of dust within animal houses has received considerable attention.

A well-studied and cost-effective approach for reducing indoor dust levels - and hence also the emission thereof - involves atomizing a mixture of water and oil into a mist, which mist is then made to spread through the animal house. The droplets of oil and water that constitute the mist will finally settle onto a floor area of the animal house, thereby creating a film of oil and water. The film binds dust - present in for example feathers, hair, dried manure, feed and bedding material - and prevents it from (re)entering the air. When properly executed, dust concentration reductions of up to 90% may be achieved while no adverse effect of the oil film has been demonstrated on the well-being or production of the animals. See for an exemplary implementation of this approach in the form of a method, a system and an oil-mixture European patent application EP 1,785,029.Although this method may work largely satisfactorily, it also embodies a major drawback. Since the mist is made to spread throughout the entire open space of an animal house, oil is not only deposited onto the floor, but also on the animals and on animal house structures such as (partitioning) walls, ventilating shafts, fans and feeding infrastructure, such as water piping, troughs etc. Cleaning of inadvertently coated structures is rather expensive, in terms of man-hours as well as costs for cleaning agents. Furthermore, the animals may respire small oil droplets suspended in the air, which may not benefit their well-being.

It is an object of the present invention to furnish a method and a system for dust reduction in animal houses that alleviates or overcomes one or more of these problems associated with the state of the art.

To this end, the invention provides an autonomous mobile oil spraying robot. The robot comprises a drive system configured to propel the robot across terrain, and an oil reservoir configured to store oil or an oil-like substance, said oil reservoir having an inlet and an outlet. The robot also comprises a spraying device, connected to the outlet of said oil reservoir and comprising at least one atomizing nozzle, said nozzle being disposed near terrain level and being configured to release a mist of atomized oil above the terrain. The robot further includes a controller that is operatively connected to the drive system, and configured to make the robot move autonomously around the terrain by controlling the drive system.

The invention is partly based on the understanding that oil, in order to prevent excessive fouling of the interior of an animal house, is preferably applied locally. That is to say, the oil is preferably sprayed (i.e. released in the form of a mist of fine oil droplets) onto, or into the air just above, the floor area of the animal house where its deposition is desired. To ensure that the sprayed oil hits the ground where it is intended, the at least one atomizing nozzle or spray head of the spraying device is disposed near terrain level. For practical circumstances, 'near terrain level' may be construed as anywhere between 0 and 50 cm, or more preferably anywhere between 0 and 25 cm from the ground. Dispensing a mist of oil at such heights minimizes the chances of oil being taken away by air streams caused by an air ventilation system. Accordingly, oil may be deposited accurately, and animals, walls and other fixed structures are no longer soiled.

Applying the oil locally also allows somewhat larger droplets of oil to be sprayed relative to the situation wherein a mist of atomized oil is to spread around the entire open space of an animal house. The larger droplets may preferably have an average diameter in the range 20 - 200 µm. This range corresponds to relatively heavy mist droplets, resembling drizzle drops. Such drops are, on the one hand, well-suited to achieve fine distributions of several millilitres of oil per square meter of sprayed surface area. On the other hand, due to their relatively large weight, they are not suspended in the air over prolonged periods of time. Instead, they will fall down, preventing animals from inhaling them and/or an air ventilation system induced air stream from getting a hold of them to discharge them to the outside air. Thus, in addition to diminished fouling, the local application of (a mist of) properly sized oil droplets may also contribute to animal well-being and an efficient use of oil.

The task of distributing the oil locally is facilitated by an autonomous mobile oil spraying robot that involves human guidance no more than known misting installations. The robot's controller, responsible for the autonomous behaviour, is preferably configured to execute a navigational routine so as to move the robot around the terrain. The navigational routine may be relatively simple. It may, for example, give rise to more or less random movement within the confines of the animal house, whereby the randomness ensures that the robot will ultimately cover the whole of the floor area it is supposed to treat. More advanced navigational routines may improve the efficiency of the robot. Such a routine may, for example, allow a set of instructions, such as coordinates and/or a floor map of the animal house to be treated, to be inputted, which instructions are then executed. One skilled in the art will appreciate that navigational routines for autonomous robotic behaviour are known in the art, and need not be elaborated upon here.

More advanced navigational routines may require the robot to determine its absolute or relative position. To this end, the mobile oil spraying robot may be provided with a position sensor that is operatively connected to the controller. The position sensor, which may either be an absolute position sensor, e.g. a gps-receiver, or a relative one, e.g. a displacement sensor, allows the controller to take its bearings and feed the positional data to the navigational routine and/or other routines as an input parameter.

According to an aspect of the invention, the controller is operatively connected to the spraying device, such that it controls spraying behaviour of the spraying device. This allows to the controller to spray selectively, for example depending on its present location.

According to an elaboration of the invention, the controller is configured to execute a mapping routine in order to maintain a map of an environment of the robot, said map reflecting sprayed and yet unsprayed locations, and to control the drive system to make the robot move to a yet unsprayed location, and having arrived at such a location, to control the spraying device to spray said location.

A reduction in dust concentration is dependent on the quantity of oil that is applied to a certain floor area. For dust particles having a diameter smaller than 10 µm, for example, the effected reduction may increase from 60% to 85% when the quantity of applied oil is increased from 8 to 24 ml/m². The mapping routine may ensure that the entire floor area of an animal house is treated with a dose sufficient to achieve the desired reduction. It is to maintain a map of the environment of the robot, and to mark locations where oil has been sprayed. Coordinates of unsprayed locations may then be fed to the navigational routine, which may control the drive system to make the robot move to that location in order to spray it. In an embodiment of the invention, the mapping routine may depart from a user supplied terrain map, which map indicates the regions of the floor area to be sprayed, and the quantities of oil that are to be applied to each region. This allows different regions to be treated differently.

According to an aspect of the invention, the mobile oil spraying robot comprises a range sensor that is operatively connected to the controller, and that is configured to detect a distance between the robot and an object in an environment of the robot.

To prevent the robot from bumping into objects such as walls or animals that inhabit the animal house, it may be fitted with a range sensor that allows it to scan its environment for nearby objects that lie on its current path. When the range sensor detects a nearby object, the controller may instruct the drive system to undertake an appropriate response action, for example halting, slowing down, or changing direction.

According to a further elaboration of the invention, the drive system comprises at least one caterpillar track.

The floor of an animal house may have a structure that is ill-suited to be driven by a robot on wheels. It may, for example, include grid floor portions, and/or straw and other soft stable litter in which caterpillar tracks are less likely to get stuck than wheels. A drive system featuring caterpillar tracks may therefore improve the reliability of the robot.

The invention also discloses an assembly including a provisioning station and an autonomous oil spraying robot. The provisioning station comprises an oil tank configured to store oil or an oil-like substance, said oil tank having an outlet that is couplable to the inlet of the oil reservoir of a mobile oil spraying robot. The mobile oil spraying robot of the assembly further comprises an oil level sensor for determining an oil level in the oil reservoir, said oil level sensor being operatively connected to the controller. The controller is configured to make the mobile oil spraying robot move to the provisioning station when the oil level in the oil reservoir drops below a predetermined value, and to couple with said station, whereby the outlet of the oil tank is coupled to the inlet of the oil reservoir, such that oil is transferred from the oil tank to the oil reservoir.

To allow the autonomous mobile oil spraying robot to operate over longer periods of time without human interference, it is preferably complemented with a provisioning station from which it may obtain its oil and energy charges.

The invention further discloses an animal house provided with an assembly according to the invention. The assembly may be deployed in all kinds of animal houses, e.g. stables, cowsheds and sties, but is especially suited for vast housings with relatively few obstacles inside, like housings for broilers and layers.

These and other features and advantages of the invention will be more fully understood from the following detailed description of certain embodiments of the invention, taken together with the accompanying drawings, which are meant to illustrate and not to limit the invention.

### Brief description of the Figures

Fig. 1 schematically shows a known dust reduction system, comprising ceiling-mounted oil atomizing nozzles; and
Fig. 2 schematically shows a dust reduction system, comprising an autonomous mobile oil spraying robot and a provisioning station, according to the present invention.

### Detailed description

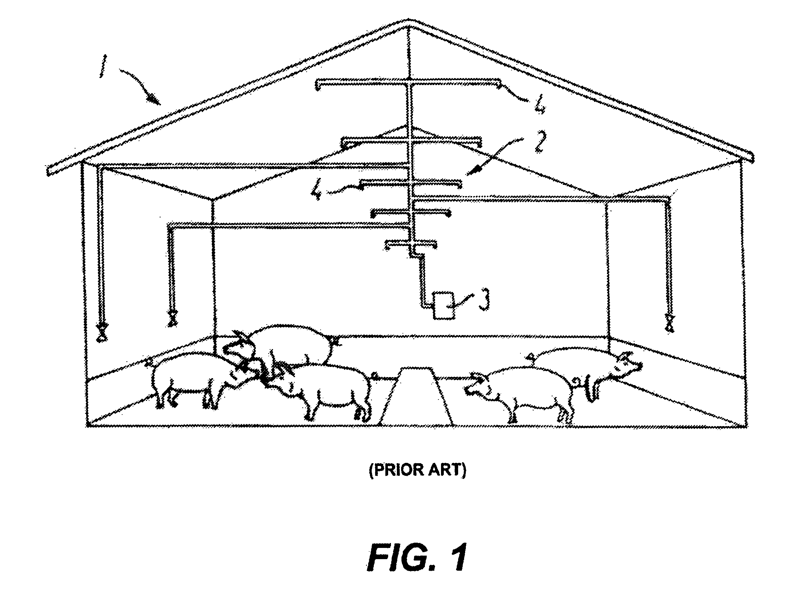

Fig. 1, taken from EP 0 680 253 B2, schematically shows an animal house 1 wherein a known dust reduction system is installed. The dust reduction system comprises a pipe system 2, the inlet side of which is connected to a supply unit 3, and the outlet of which consists of a number of atomizing nozzles 4. The supply unit 3 provides the pipe system 2 with a highpressure mixture of water and oil, which mixture is fed to the atomizing nozzles 4. The nozzles 4 spray out a mist of water and oil droplets to bind or lay the dust in the animal house 1.

As is evident from Fig. 1, the nozzles 4 are disposed high above the ground, relatively close to the ceiling of the animal house 1. This configurations allows the mist droplets to spread across the animal house while they slowly descend. The drawbacks of this approach have been described above, and include: extensive fouling of animal house structures, the chance that air streams caused by the air ventilation system carry along significant amounts of oil to the outside environment, and inhalation of oil droplets by animals and personnel.

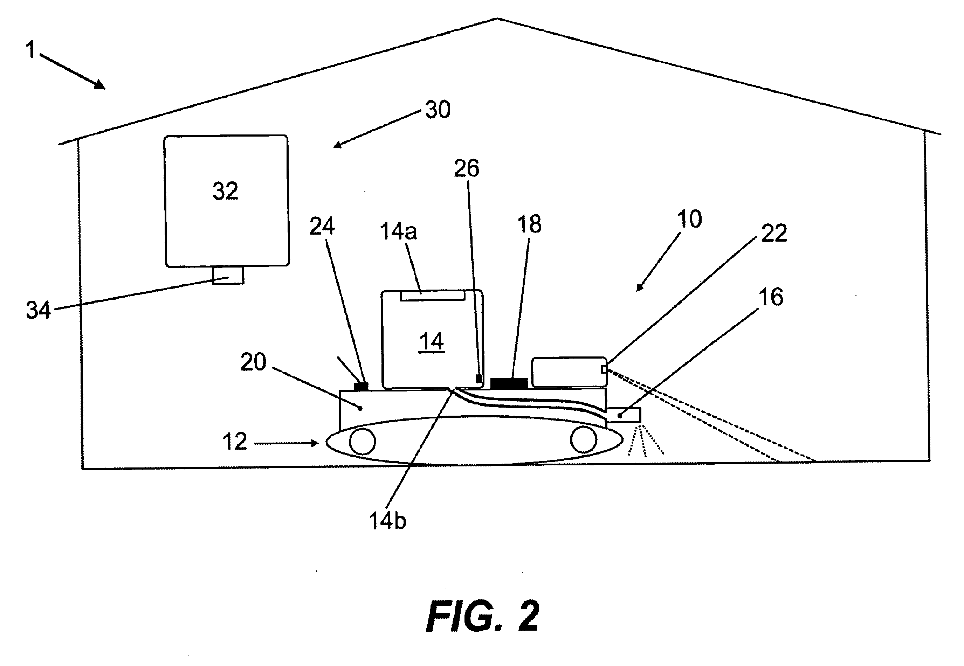

To overcome these drawbacks, the invention provides for the autonomous mobile oil spraying robot 10, schematically depicted in Fig. 2. The robot comprises a drive system 12, an oil reservoir 14, a spraying device 16, and a controller 18. These components are all mounted on a chassis 20 that provides the supporting and interconnecting structure.

The drive system 12 may comprise any means that enable the robot 10 to be propelled across terrain. It will typically include a motor, such as a small combustion engine or an electromotor. In both cases, a battery pack may be included that serves as a power source for other components of the robot 10, e.g. the controller 18, the spraying device 16 etc., as well. The drive system 12 may further include a number of individual wheels, one of more of which may be steerable. Alternatively, the drive system 12 may comprise caterpillar tracks as shown in the embodiment of Fig 2. The latter option has the advantage of being more robust, and less prone to getting stuck in soft terrain. When caterpillar tracks (or wheels) are provided on two sides of the chassis 20, steering may be achieved by applying different speeds at the left and right wheels or tracks. Manipulating the sum and difference of the speeds, the velocity and orientation of the robot can be controlled at any instant.

The oil reservoir 14 is a container having an inlet 14a and an outlet 14b. The outlet 14b is connected to the spraying device 16. The oil volume of the oil reservoir may be dependent on the environment in which it is used, more in particular, on the floor area of the animal house to be sprayed, and the quantity of oil to be sprayed per square meter.

The spraying device 16, which is under the control of controller 18, may be any device that is capable of transforming the oil supplied from the oil reservoir 14 into a mist of properly sized oil droplets. The atomizing nozzle of the spraying device that at least partly fulfills this task may be of a conventional design, and for example include a piezo atomizer, a turbulence-chamber and/or a deflector nozzle, depending on the nature of the oil or oil like substance to be atomized/vaporized and released as mist. Any outlet that actually dispenses a mist of liquid droplets, which in this text is termed a 'atomizing nozzle' or 'spray head', may preferably be disposed near terrain level. This is to ensure that the atomized oil hits the ground soon or at least not too long after being released from an atomizing nozzle, and is not windswept.

With regard to the terminology, it is noted that the phrase 'oil or an oil like substance' intends to include both oils and oil emulsions, e.g. an oil-in-water emulsion. As oil-in-water emulsions have a tendency to break, emulsifiers are often used to form emulsions with a reasonable stability. However, emulsifiers may entail a risk of long-time effects on the respiratory organs of the animals and the stockbreeders. In addition, they may break down, causing the formation of lumps that may cause clogging of the spraying device. Accordingly, it may be preferable to spray pure vegetable oils, such as rapeseed oil. Cold pressed, refined rapeseed oil has been found easy to spray and not to bring about any serious clogging of atomizing nozzles of the spraying device, even over extended periods. In case the spraying of an oil-water mixture is nevertheless preferred, the robot 10 may be fitted with two reservoirs. One for oil, e.g. reservoir 14, and an extra one for water. The oil and water may then be mixed on the fly by the spraying device 16, without the use of emulsifiers. Mixing may, for example, be accomplished by injecting oil and water into a common mixing chamber under high pressure created by highpressure injectors.

In advantageous embodiments, functional additives may be mixed with / dissolved in the oil to be sprayed. In one embodiment, for example, acid such as sulfuric or nitric acid may be added to the oil to reduce the ammonia (NH₃ (g)) concentration in the air and to reduce ammonia emission from the building. When ammonia is formed inside the bedding / manure material the oil film containing the dissolved acid will bind the ammonia. Alternatively, additives aimed at reducing undesired aromatic substances from being emitted to the air may be employed. Such odour reduction / neutralizing additives are in themselves known in the art.

The robot 10 depicted in Fig. 2 is equipped with a variety of sensors. It includes a range sensor 22, a position sensor 24 and a oil level sensor 26. All sensors are operatively connected to the controller 18, such that information gathered by the sensors 22, 24, 26 is available to the controller 18 and the programs or routines it executes.

The sort of sensors used by the robot 10 may be different for different embodiments. The range sensor 22, for example, may be a sonar that transmits sound waves in the direction of motion, detects an echo, and measures the elapsed time between the start of the transmitted sound wave and the reception of its echo to determine the distance from the reflecting object. Alternatively, the range sensor 22 may be a laser, or a (passive) infrared sensor. One skilled in the art will appreciate that position sensors and fluid level sensors are also available in different sorts, which may be more or less suitable for the present application. Any sensor that may be used advantageously is encompassed within the scope of the invention.

The controller 18 is the operational heart of the robot 10. It is linked to the afore-mentioned sensors 22, 24, 26, and controls the operation of the drive system 12 and the spraying device 16. It may typically comprise a processor capable of executing a number of routines that determine the autonomous behaviour of the robot 10. The controller is preferably configured to execute a navigational routine that moves the robot around the terrain. As discussed above, such a routine may be relatively simple or allow for the input of detailed instructions that are to be carried out. Input from the position sensor 22 may enable the robot 10 to navigate efficiently. While moving around the terrain, the controller 18 may receive information about nearby objects from the range sensor 22. In response, it may undertake an action that may or may not be based on the probable identity of the object. In case the navigational routine uses a floor map of the animal house, having walls and other structures marked thereon, and a position sensor is used to determine where on the map the robot is located, the controller may be able to assess whether the robot approaches a fixed structure, or a passing animal. In the former situation, it would make sense to change direction. In the latter, the controller might instruct the drive system 12 to halt or move very slowly until the animal moves along.

To enable the robot to make efficient use of the supply of oil the robot 10 is carrying, and to prevent some parts of the floor area of the animal house 1 from being soaked with oil while other parts remain long untreated, the controller 18 may also be configured to execute a mapping routine. The mapping routine is to maintain a map of the environment of the robot 10, and to mark locations where oil has been sprayed. Coordinates of unsprayed locations may then be fed to the navigational routine, which may control the drive system 12 to make the robot 10 move to that location in order to spray it.

In an advantageous embodiment of the invention, an assembly is provided including an autonomous oil spraying robot 10 and a provisioning station 30. The provisioning station 30 may be disposed at a suitable location in the animal house 1, reachable by the robot 10. It comprises an oil tank 32 that is configured to store oil or an oil-like substance. The oil tank 32 is equipped with an outlet 34 that is couplable to the inlet 14a of the oil reservoir 14 of the robot 10. It is noted that the term 'couplable' does not necessarily involve a mechanical connection. The outlet 34 of the oil tank 32 may be said to have been coupled to the inlet 14a of the oil reservoir 14 when oil is allowed to be transferred from the former into the latter. The assembly may involve a variety of coupling mechanisms. A simple mechanism, for example, could release the outlet 34 of the oil tank 32 when the presence of the robot 10 is detected underneath, either mechanically or electronically. Oil may then flow under the action of gravity, from the higher oil tank 32 to the lower oil reservoir 14. The provisioning station 30 may be expanded with several features, such as a battery charger, which would allow the robot to recharge any batteries it is using, and a homing beacon, which would allow the robot to find its way to the provisioning station 30 if it is not otherwise provided with the coordinates thereof. In the case of a homing beacon, the robot may have to be fitted with an extra receiver sensitive to the signal of the beacon. It will be understood that, in case the robot 10 is provided with a water reservoir (for example to be able to prepare an oil-water emulsion on the fly, as described above), the provisioning station 30 may comprise a water tank that, by analogy of the oil tank 32 and the oil reservoir 14, is configured to replenish the water supply in said water reservoir. Although illustrative embodiments of the present invention have been described in detail with reference to the accompanying drawings, it is to be understood that the invention is not limited to these embodiments. Various changes or modifications may be effected by one skilled in the art without departing from the scope of the invention as defined in the claims. In particular, the various embodiments described above, or elements thereof, may be combined to provide further embodiments not explicitly described.

**List of elements**

| | |
|---|---|
| 1 | Animal house |
| 2 | Pipe system |
| 3 | Supply unit |
| 4 | Atomizing nozzles |
| | |
| 10 | Autonomous oil spraying robot |
| 12 | Drive system |
| 14 | Oil reservoir |
| 14a | Inlet of oil reservoir |
| 14b | Outlet of oil reservoir |
| 16 | Spraying device |
| 18 | Controller |
| 20 | Chassis |
| 22 | Range sensor |
| 24 | Position sensor |
| 26 | Oil level sensor |
| | |
| 30 | Provisioning station |
| 32 | Oil tank |
| 34 | Outlet of oil tank |

## Claims

1. An autonomous mobile oil spraying robot (10), comprising:
- a drive system (12) configured to propel the robot across terrain;
- an oil reservoir (14) configured to store oil or an oil-like substance, said oil reservoir having an outlet (14b);
- a spraying device (16), connected to the outlet of said oil reservoir and comprising at least one atomizing nozzle, said nozzle being disposed near terrain level and being configured to release a mist of atomized oil above the terrain; and
a controller (18), operatively connected to the drive system, and configured to make the robot move autonomously around the terrain by controlling the drive system.

2. The autonomous mobile oil spraying robot according to claim 1, wherein the atomizing nozzle is disposed between 0 and 50 cm above terrain level.

3. The autonomous mobile oil spraying robot (10) according to any of the claims 1-2, wherein the atomizing nozzle is configured to release a mist of oil droplets having an average diameter in the range of 20 - 200 µm.

4. The autonomous mobile oil spraying robot (10) according to any of the claims 1-3, wherein the controller (18) is operatively connected to the spraying device (16), such that it controls spraying behaviour of the spraying device.

5. The autonomous mobile oil spraying robot (10) according to any of the claims 1-4, further comprising:
- a position sensor (24) that is operatively connected to the controller (18).

6. The autonomous mobile oil spraying robot (10) according to any of the claims 1-5, further comprising:
- a range sensor (22), operatively connected to the controller (18), and configured to detect a distance between the robot and an object in an environment of the robot.

7. The autonomous mobile oil spraying robot (10) according to any of the claims 1-6, wherein the controller (18) is configured:
- to execute a mapping routine in order to maintain a map of an environment of the robot, said map reflecting sprayed and yet unsprayed locations; and
- to control the drive system (12) to make the robot move to a yet unsprayed location, and having arrived at such a location, to control the spraying device (16) to spray said location.

8. The autonomous mobile oil spraying robot (10) according to any of the claims 1-7, wherein the controller (18) is configured to make the spraying device (16) spray between 5 and 40 ml of oil per square meter of terrain area.

9. The autonomous mobile oil spraying robot according to any of the claims 1-8, wherein the drive system (12) comprises a caterpillar track.

10. The autonomous mobile oil spraying robot (10) according to any of the claims 1-9, further comprising:
- a water reservoir having an outlet, said outlet being connected to the spraying device (16), and
wherein the spraying device (12) comprises means for mixing water from the water reservoir with oil from the oil reservoir (14), enabling a mixture of water and oil to be sprayed onto the terrain.

11. Assembly comprising:
- a provisioning station (30) comprising:
- an oil tank (32) configured to store oil or an oil-like substance, said oil tank having an outlet (34) that is couplable to an inlet (14a) of the oil reservoir (14) of a mobile oil spraying robot (10) according to any of the preceding claims; and
- a mobile oil spraying robot (10) according to any of the claims 1-10, further comprising:
- an oil level sensor (26) for determining an oil level in the oil reservoir (14), said oil level sensor being operatively connected to the controller (18),
wherein the controller is configured to make the mobile oil spraying robot move to the provisioning station when the oil level in the oil reservoir drops below a predetermined value, and to couple with said station, whereby the outlet of the oil tank is coupled to the inlet of the oil reservoir, such that oil is transferred from the oil tank to the oil reservoir.

12. Assembly according to claim 11, wherein the provisioning station (30) comprises a power outlet socket, wherein the mobile oil spraying robot (10) comprises a battery for powering at least one of the drive system (12), the spraying device (16) and the controller (18), said battery being provided with a power inlet socket, and wherein the power outlet socket and the power inlet socket are disposed such that when the robot and the provisioning station couple, the power outlet socket engages the power inlet socket, allowing the battery to be recharged.

13. Method for dust reduction in an animal house, comprising:
- providing an autonomous mobile oil spraying robot (10) according to any of the claims 1-9;
- providing an animal house whose floor area is to be sprayed with oil or an oil like substance; and
- allowing the robot to autonomously spray the floor area of the animal house with oil.

14. Method for dust reduction in an animal house according to claim 13, wherein the oil being sprayed comprises an acid additive for preventing or reducing ammonia emission from bedding material and/or manure to the air.

15. Method for dust reduction according to claim 13 or 14, wherein the oil being sprayed comprises an odour reducing additive.

## Patentansprüche

1. Autonomer mobiler Ölsprühroboter (10), umfassend:
- ein Antriebssystem (12), konfiguriert zum Antreiben des Roboters über ein Gelände;
- einen Öltank (14), konfiguriert zum Speichern von Öl oder einer ölähnlichen Substanz, welches Ölreservoir einen Abfluss (14b) aufweist;
- eine Sprühvorrichtung (16), verbunden mit dem Abfluss des Ölreservoirs und umfassend mindestens eine Sprühdüse, die nahe der Geländeebene angeordnet ist und konfiguriert ist, um einen Sprühölnebel über dem Gelände auszuscheiden; und
einen Controller (18), operativ mit dem Antriebssystem verbunden und so konfiguriert, dass sich der Roboter durch Steuerung des Antriebssystems autonom über das Gelände bewegt.

2. Autonomer mobiler Ölsprühroboter nach Anspruch 1, wobei die Sprühdüse zwischen 0 und 50 cm über der Geländeebene angeordnet ist.

3. Autonomer mobiler Ölsprühroboter (10) nach einem der Ansprüche 1-2, wobei die Sprühdüse konfiguriert ist, um einen Nebel von Öltröpfchen mit einem durchschnittlichen Durchmesser im Bereich von 20-200 µm auszuscheiden.

4. Autonomer mobiler Ölsprühroboter (10) nach einem der Ansprüche 1-3, wobei der Controller (18) operativ mit der Sprühvorrichtung (16) verbunden ist, sodass er das Sprühverhalten der Sprühvorrichtung steuert.

5. Autonomer mobiler Ölsprühroboter (10) nach einem der Ansprüche 1-4, ferner umfassend:
- einen Positionssensor (24), der operativ mit dem Controller (18) verbunden ist.

6. Autonomer mobiler Ölsprühroboter (10) nach einem der Ansprüche 1-5, ferner umfassend:
- einen Bereichssensor (22), operativ mit dem Controller (18) verbunden und konfiguriert, um einen Abstand zwischen dem Roboter und einem Objekt in einer Umgebung des Roboters zu detektieren.

7. Autonomer mobiler Ölsprühroboter (10) nach einem der Ansprüche 1-6, wobei der Controller (18) konfiguriert ist für:
- die Ausführung einer Mappingroutine, um eine Karte einer Umgebung des Roboters zu erhalten, die besprühte und noch unbesprühte Stellen wiedergibt; und
- die Steuerung des Antriebssystems (12), damit sich der Roboter zu einer noch unbesprühten Stelle bewegt und, nachdem er an einer solchen Stelle angekommen ist, um die Sprühvorrichtung (16) so zu steuern, dass die Stelle besprüht wird.

8. Autonomer mobiler Ölsprühroboter (10) nach einem der Ansprüche 1-7, wobei der Controller (18) so konfiguriert ist, dass die Sprühvorrichtung (16) zwischen 5 und 40 ml Öl pro Quadratmeter Geländefläche versprüht.

9. Autonomer mobiler Ölsprühroboter (10) nach einem der Ansprüche 1-8, wobei das Antriebssystem (12) ein Raupenfahrwerk umfasst.

10. Autonomer mobiler Ölsprühroboter (10) nach einem der Ansprüche 1-9, ferner umfassend:
- ein Wasserreservoir mit einem Ablass, das mit der Sprühvorrichtung (16) verbunden ist, und
wobei die Sprühvorrichtung (12) Mittel umfasst, um Wasser aus dem Wasserreservoir mit Öl aus dem Ölreservoir (14) zu mischen, sodass ein Gemisch aus Wasser und Öl auf dem Gelände versprüht werden kann.

11. Anordnung, umfassend:
- eine Versorgungsstation (30), umfassend:
- einen Öltank (32), konfiguriert zum Speichern von Öl oder einer ölähnlichen Substanz, wobei der Öltank einen Ablass (34) aufweist, der sich mit einem Einlass (14a) des Ölreservoirs (14) eines mobilen Ölsprühroboters (10) nach einem der vorhergehenden Ansprüche verbinden lässt; und
- einen mobilen Ölsprühroboter (10) nach einem der Ansprüche 1-10, ferner umfassend:
- einen Ölstandsensor (26) zum Bestimmen eines Olstands im Ölreservoir (14), welcher Olstandsensor operativ mit dem Controller (18) verbunden ist,
wobei der Controller so konfiguriert ist, dass sich der mobile Ölsprühroboter zur Versorgungsstation bewegt, wenn der Ölstand im Ölreservoir unter einen vorbestimmten Wert sinkt, und sich an die Station anschließt, wobei der Auslass des Öltanks so an den Einlass des Ölreservoirs angeschlossen wird, dass Öl vom Öltank zum Ölreservoir übertragen wird.

12. Anordnung nach Anspruch 11, wobei die Versorgungsstation (30) einen Stromausgangsanschluss umfasst, wobei der mobile Ölsprühroboter (10) eine Batterie umfasst, um mindestens entweder das Antriebssystem (12), die Sprühvorrichtung (16) oder den Controller (18) mit Strom zu versorgen, und die Batterie mit einem Stromeingangsanschluss versehen ist, und wobei der Stromausgangsanschluss und der Stromeingangsanschluss so angeordnet sind, dass, wenn die Verbindung zwischen dem Roboter und der Versorgungsstation hergestellt wird, der Stromausgangsanschluss mit dem Stromeingangsanschluss ineinander greifen, sodass die Batterie aufgeladen werden kann.

13. Verfahren zur Staubreduktion in Ställen, umfassend:
- die Bereitstellung eines autonomen mobilen Ölsprühroboters (10) nach einem der Ansprüche 1-9;
- die Bereitstellung eines Stalls, dessen Bodenfläche mit Öl oder einer ölähnlichen Substanz besprüht werden soll; und
- die Möglichkeit für den Roboter, die Bodenfläche des Stalls autonom mit Öl zu besprühen.

14. Verfahren zur Staubreduktion in Ställen nach Anspruch 13, wobei das versprühte Öl ein Säureadditiv enthält, um Ammoniakemission aus dem Streumaterial und/oder Dung an die Luft zu verhindern oder zu reduzieren.

15. Verfahren zur Staubreduktion nach Anspruch 13 oder 14, wobei das versprühte Öl ein Additiv zur Geruchsreduktion umfasst.

## Revendications

1. Robot mobile autonome de pulvérisation d'huile (10) comprenant :
un système d'entraînement (12) configuré pour propulser le robot sur le terrain ;
un réservoir d'huile (14) configuré pour stocker de l'huile ou une substance de type huile, ledit réservoir d'huile ayant une sortie (14b) ;
un dispositif de pulvérisation (16) raccordé à la sortie dudit réservoir d'huile et comprenant au moins une buse de vaporisation, ladite buse étant disposée à proximité du niveau du terrain et étant configurée pour libérer un brouillard d'huile vaporisé au-dessus du terrain ; et
un organe de commande (18) raccordé de manière opérationnelle au système d'entraînement, et configuré pour que le robot se déplace de manière autonome sur le terrain en commandant le système d'entraînement.

2. Robot mobile autonome de pulvérisation d'huile selon la revendication 1, dans lequel la buse de vaporisation est disposée entre 0 et 50 cm au-dessus du niveau du terrain.

3. Robot mobile autonome de pulvérisation d'huile (10) selon l'une quelconque des revendications 1 à 2, dans lequel la buse de vaporisation est configurée pour libérer un brouillard de gouttelettes d'huile ayant un diamètre moyen dans la plage de 20 - 200 µm.

4. Robot mobile autonome de pulvérisation d'huile (10) selon l'une quelconque des revendications 1 à 3, dans lequel l'organe de commande (18) est raccordé de manière opérationnelle au dispositif de pulvérisation (16), de sorte qu'il commande le comportement de pulvérisation du dispositif de pulvérisation.

5. Robot mobile autonome de pulvérisation d'huile (10) selon l'une quelconque des revendications 1 à 4, comprenant en outre :
un capteur de position (24) qui est raccordé de manière opérationnelle à l'organe de commande (18).

6. Robot mobile autonome de pulvérisation d'huile (10) selon l'une quelconque des revendications 1 à 5, comprenant en outre :
un capteur de plage (22) raccordé de manière opérationnelle à l'organe de commande (18), et configuré pour détecter une distance entre le robot et un objet dans un environnement du robot.

7. Robot mobile autonome de pulvérisation d'huile (10) selon l'une quelconque des revendications 1 à 6, dans lequel l'organe de commande (18) est configuré :
pour exécuter une routine de cartographie afin de maintenir une carte d'un environnement du robot, ladite carte reflétant les emplacements pulvérisés et non encore pulvérisés ; et
pour commander le système d'entraînement (12) pour que le robot se déplace à un emplacement non encore pulvérisé, et ayant atteint un tel emplacement, pour commander le dispositif de pulvérisation (16) afin qu'il pulvérise ledit emplacement.

8. Robot mobile autonome de pulvérisation d'huile (10) selon l'une quelconque des revendications 1 à 7, dans lequel l'organe de commande (18) est configuré pour que le dispositif de pulvérisation (16) pulvérise entre 5 et 40 ml d'huile par mètre carré de surface de terrain.

9. Robot mobile autonome de pulvérisation d'huile selon l'une quelconque des revendications 1 à 8, dans lequel le système d'entraînement (12) comprend une chenille.

10. Robot mobile autonome de pulvérisation d'huile (10) selon l'une quelconque des revendications 1 à 9, comprenant en outre :
un réservoir d'eau ayant une sortie, ladite sortie étant raccordée au dispositif de pulvérisation (16), et
dans lequel le dispositif de pulvérisation (12) comprend des moyens pour mélanger l'eau provenant du réservoir d'eau avec l'huile provenant du réservoir d'huile (14), permettant de pulvériser un mélange d'eau et d'huile sur le terrain.

11. Ensemble comprenant :
une station d'approvisionnement (30) comprenant :
une cuve d'huile (32) configurée pour stocker de l'huile ou une substance de type huile,
ladite cuve d'huile ayant une sortie (34) qui peut être couplée à une entrée (14a) du réservoir d'huile (14) d'un robot mobile de pulvérisation d'huile (10) selon l'une quelconque des revendications précédentes ; et
un robot mobile de pulvérisation d'huile (10) selon l'une quelconque des revendications 1 à 10, comprenant en outre :
un capteur de niveau d'huile (26) pour déterminer un niveau d'huile dans le réservoir d'huile (14), ledit capteur de niveau d'huile étant raccordé de manière opérationnelle à l'organe de commande (18),
dans lequel l'organe de commande est configuré pour que le robot mobile de pulvérisation d'huile se déplace jusqu'à la station d'approvisionnement lorsque le niveau d'huile dans le réservoir d'huile chute au-dessous d'une valeur prédéterminée, et pour le coupler à ladite station, moyennant quoi la sortie de la cuve d'huile est couplée à l'entrée du réservoir d'huile, de sorte que l'huile est transférée de la cuve d'huile au réservoir d'huile.

12. Ensemble selon la revendication 11, dans lequel la station d'approvisionnement (30) comprend un raccord de sortie de courant, dans lequel le robot mobile de pulvérisation d'huile (10) comprend une batterie pour alimenter au moins l'un parmi le système d'entraînement (12), le système de pulvérisation (16) et l'organe de commande (18), ladite batterie étant fournie avec un raccord d'entrée de courant, et dans lequel le raccord de sortie de courant et le raccord d'entrée de courant sont disposés de sorte que lorsque le robot et la station d'approvisionnement se couplent, le raccord de sortie de courant met en prise le raccord d'entrée de courant, permettant à la batterie de se recharger.

13. Procédé pour réduire la poussière dans des abris pour animaux, comprenant les étapes consistant à :
prévoir un robot mobile autonome de pulvérisation d'huile (10) selon l'une quelconque des revendications 1 à 9 ;
prévoir un abri pour animaux dont le sol doit être pulvérisé avec de l'huile ou une substance de type huile ; et
permettre au robot de pulvériser de manière autonome la surface de sol de l'abri pour animaux avec de l'huile.

14. Procédé pour réduire la poussière dans un abri pour animaux selon la revendication 13, dans lequel l'huile qui est pulvérisée comprend un additif acide pour empêcher ou réduire l'émission d'ammoniac provenant de la litière et/ou du fumier, dans l'air.

15. Procédé pour réduire la poussière selon la revendication 13 ou 14, dans lequel l'huile qui est pulvérisée comprend un additif de réduction d'odeur.
